# EUROPEAN PATENT SPECIFICATION

(11) **EP 3 587 736 B1**
(45) Date of publication and mention of the grant of the patent: **17.02.2021**
(21) Application number: 19180976.3
(22) Date of filing: 18.06.2019
(51) Int. Cl.: F01D 5/28, F01D 9/04

(54) **COMPOSITE AIRFOIL WITH FIBRES FORMING A CLEFT IN THE PLATFORM**
COMPOSITE-GASTURBINENSCHAUFEL MIT SICH TEILENDEN FASERN IN DER PLATTFORM
AUBE DE TURBINE COMPOSITE AVEC DES FIBRE SE PARTAGER DANS LA PLATEFORME

(30) Priority: 22.06.2018 US 201816015318
(43) Date of publication of application: 01.01.2020
(73) Proprietor: United Technologies Corporation, Farmington, CT 06032 (US)
(72) Inventor: KLINE, Bradley P., Middletown, CT 06457 (US); SHAHAB, Farruqh, East Hartford, CT 06118 (US)
(74) Representative: Dehns

(56) References cited:
- EP-A1- 3 002 117
- EP-A1- 3 004 560
- EP-A2- 2 363 574
- EP-A2- 2 562 360
- US-A- 5 639 535
- US-A1- 2015 231 849

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A prior art airfoil component having the features of the preamble to claim 1 is disclosed in EP 3,004,560. Similar prior art airfoil components are disclosed in EP 2,562,360 and EP 2,363,574. Methods of fabricating composite parts and filling clefts between fibre layers therein using cover fibre layers are disclosed in US 5,639,535, US 2015/231849 and EP 3,002,117.

### SUMMARY

From one aspect, the present invention provides an airfoil component according to claim 1.

From another aspect, the present invention provides a method for fabricating an airfoil component according to claim 3.

Features of embodiments are recited in the dependent claims.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates an example airfoil component.
Figure 3 illustrates a sectioned view of an airfoil component.
Figure 4 illustrates an example of fiber layers.
Figure 5 depicts a method of fabricating an airfoil component.

### DETAILED DESCRIPTION

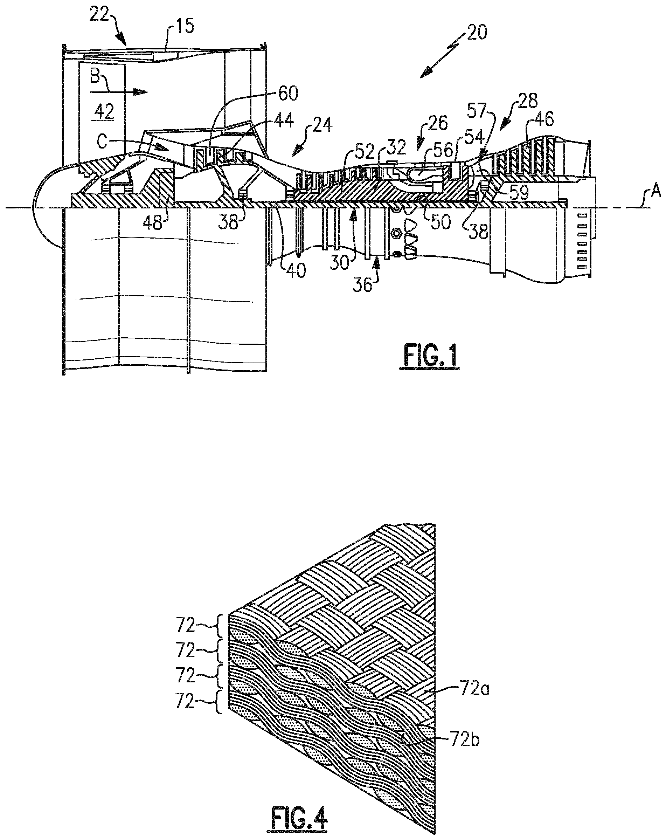

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

The engine 20 includes a row of airfoil components (composite components), which in this example are static vanes 60 ("vanes 60") in the compressor section 24. Although the examples herein will be described with respect to the vanes 60, it is to be understood that the examples can extend to other types of airfoils, such as rotatable blades, other vane multiplets, vane singlets, and to other types of non-airfoil composite structures.

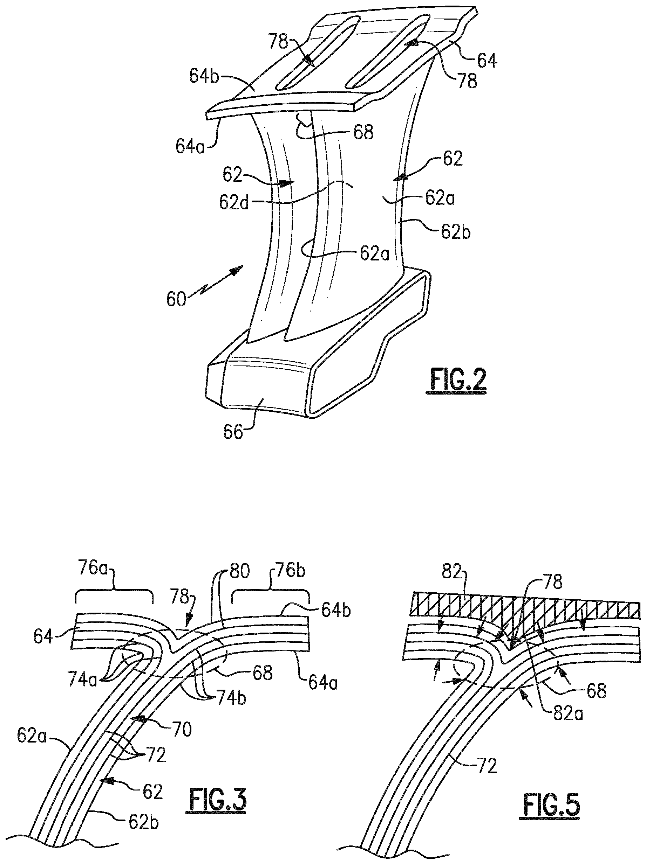

Figure 2 illustrates an example of several of the vanes 60. In this example, the vanes 60 are provided as vane doublet segments. Such segments are arranged circumferentially to form a full row of vanes 60. The vane doublet segment includes two airfoils 62 that share a common outer diameter platform 64 and an inner diameter box structure 66.

Each airfoil 62 includes a leading and trailing ends 62a/62b, and first and second sides 62c/62d (typically pressure and suction sides). The platform 64 includes a first or gaspath side 64a and a second or non-gaspath side 64b. Here, gaspath and non-gaspath are made with reference to the main bypass airflow. The gaspath side 64a bounds the main bypass airflow in the bypass flow path B of the engine 20.

Referring also to Figure 3, which shows a sectioned view through a portion of the airfoil 62 and platform 64, each airfoil 62 is joined through a transition section 68 to the platform 64 to form a T-shaped intersection. In examples of a non-airfoil composite component, the airfoil 62 would be a leg and the platform 64 would be a flange. The airfoil 62 and the platform 64 are formed of a composite material 70 having fiber layers 72.

Figure 4 shows a representative example of the fiber layers 72. In this example, the fiber layers 72 include fibers 72a that are embedded in a matrix 72b between the fibers 72a. The fibers in a fiber layer 72 may be single filaments but more typically will be bundles of filaments in the form of tows or yarns. As an example, a single tow may have several thousand filaments. The tows or yarns of a fiber layer 72 may be arranged in a fiber architecture, which here refers to an ordered arrangement of the tows or yarns relative to one another in a fiber layer 72. The type of ordered arrangement may include, but is not limited to, unidirectional, 2- or 3-dimensional woven, triaxial braid, and non-crimp fabric. There may also be variations within a type of arrangement, such as the relative angles of the tows to one another.

In a further example, the composite material 70 is a polymer matrix composite. For instance, the matrix 72b is polymer-based. Example polymers may include, but are not limited to, epoxy, polyimide, and bismaleimide. Example fibers 72a may include, but are not limited to, carbon fibers, glass fibers, and aramid fibers. In one example, all of the fiber layers 72 of the vanes 60 are identical with regard to the type of fibers 72a and type of polymer matrix 72b. Alternatively, some of the fiber layers 72 may be one type of fibers 72a (e.g., one of glass, carbon, or aramid) and polymer matrix 72b (e.g., one of epoxy, polyimide, or bismaleimide) and other of the fiber layers 72 may be a different type of fibers 72a (e.g., a different one of glass, carbon, or aramid) and polymer matrix 72b (e.g., a different one of epoxy, polyimide, or bismaleimide).

As best seen in Figure 3, the fiber layers 72 are contiguous in the airfoil 62. Each fiber layer 72 is directly next to and in contact with the next fiber layer 72 in a stacked arrangement. The fiber layers 72 then diverge in the transition section 68. The transition section 68 is the region where the fiber layers 72 bend to transition from the airfoil 62 to the platform 64. In the transition section 68, a first portion (designated at 74a) of the fiber layers 72 diverges to form a first section 76a of the platform 64 on the first side 62a of the airfoil 62 and a second portion (designated at 74b) of the fiber layers 72 diverges to form a second section 76b of the platform 64 on the second side 62b of the airfoil 62. The diverging of the fiber layers 72 establishes an open elongated cleft 78 (see also Figure 2) along the non-gaspath side 64b of the platform 64. That is, the diverging of the fiber layers 72 defines the cleft 78 and, but for the diverging, the cleft 78 would not exist.

In this example, the cleft 78 is V-shaped. For instance, the V-shape is not a perfect "V" but rather has a rounded nose and legs or sides of equal or unequal length. The fiber layers 72 at the cleft 78 are consolidated. For example, the fiber layers 72 in the transition section 68 were formed by application of heat and pressure to remove or substantially remove voids, distribute the polymer of the matrix 72b, and fully cure the polymer matrix 72b.

As can also be seen in Figure 3, there are cover fiber layers 80 that extend through the cleft 78. The layers 80 do not fill the cleft 78 but have the effect of smoothing over the nose of the V-shape and reinforcing the platform 64. The layers 80 extend only in the platform 64, although the layers 80 may extend into a portion of the transition section 68. The airfoil 62 excludes the layers 80. The layers 80 are also fully consolidated.

The cleft 78 serves to strengthen the vane 60 but is also a vestige of the process of fabricating the vane 60. Figure 5 depicts an example process or method of fabricating the vane 60. The vane 60 can be fabricated in a molding process that includes placing the fiber layers 72 into a mold tool 82 that has a ridge 82a. Initially, the fiber layers 72 are in an uncured or partially cured state, such as pre-impregnated fiber layers. The fiber layers 72 can be placed into the mold tool 82 by hand or by an automated or partially automated process. Once in place, the mold tool 82, only part of which is shown, closes.

The ridge 82a is inserted into the cleft 78. This can be achieved by placing the fiber layers 72 in the transition section 68 over the ridge 82a, by moving the ridge 82a into the cleft 78 during closing of the mold tool 82, or a combination of placement and closing of the mold tool 82. The ridge 82a has a profile that matches the profile of the cleft 78. Thus, the ridge 82a, once inserted, bears against the surfaces of the cleft 78.

The mold tool 82 applies heat and pressure to the fiber layers 72, as denoted by the arrows in the figure. The heart and pressure forms the fiber layers 72 to the final or near final shape of the vane 60 and consolidates the fiber layers 72. The fiber layers 72 are consolidated by the ridge 82a of the mold tool 82, in which the fiber layers 72 in the area of the transition section 68 are compressed between the ridge 82a and another part of the mold tool 82 that bears against the airfoil 62. The heat and pressure remove or substantially remove voids, distribute the polymer of the matrix 72b, and fully cure the polymer. Moreover, since the profile of the ridge 82a matches the profile of the cleft 78 and bears against the surfaces of the cleft 78, the ridge 82a evenly applies the pressure and heat in the transition section 68, which may enhance the strength of the vane 60 in the transition section 68. For a similar composite structure formed with a "noodle" or filler in the gap where the fiber layers divide, pressure cannot be applied fully or evenly because it may inadvertently shift the noodle or filler and/or wrinkle the fiber layers. Thus, the region near the noodle or filler cannot be properly consolidated and may be weaker than most other portions of the structure that are fully consolidated. However, the cleft 78, in cooperation with the ridge 82a, permits enhanced consolidation.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An airfoil component comprising:
a platform (64) having a gaspath side (64a) and a non-gaspath side (64b);
an airfoil (62) that is joined through a transition section (68) to the platform (64),
the platform (64) and airfoil (62) being formed of a composite material having fiber layers (72), the fiber layers (72) being contiguous in the airfoil (62) and diverging in the transition section (68) such that a first portion (74a) of the fiber layers (72) forms a first section (76a) of the platform (64) on a first side (62a) of the airfoil (62) and a second portion (76b) of the fiber layers (72) forms a second section (76b) of the platform (64) on a second side (62b) of the airfoil (62), the diverging of the fiber layers (72) establishing an open elongated cleft (78) along the non-gaspath side (64b) of the platform (64) that is V-shaped, wherein the fiber layers (72) at the cleft (78) are consolidated; and **characterized in that**
the component further comprises cover fiber layers (80) extending through the cleft (78); and **in that**
the cover fiber layers (80) smooth over the nose of the V-shape but do not fill the cleft (78), the airfoil (62) excludes the cover fiber layers (80), and the cover fibre layers (80) are fully consolidated.

2. The component as recited in claim 1, wherein the composite material is a fully cured polymer matrix composite.

3. A method for fabricating an airfoil component, the method comprising:
placing fiber layers (72) into a mold to form a platform (64) that has a gaspath side (64a) and a non-gaspath side (64b) and an airfoil (62) that is joined through a transition section (68) to the platform (64), the fiber layers (72) are contiguous in the airfoil (62) and diverge in the transition section (68) such that a first portion (74a) of the fiber layers (72) extends on a first side (62a) of the airfoil (62) and a second portion (76b) of the fiber layers (72) extends on a second side (62b) of the airfoil (62), the diverging of the fiber layers (72) establishing an open elongated cleft (78) along the non-gaspath side (64b) of the platform (64) that is V-shaped;
placing cover fiber layers (80) to extend through the cleft (78) such that the cover fiber layers (80) smooth over the nose of the V-shape but do not fill the cleft (78) and the airfoil (62) excludes the cover fiber layers (80); and
consolidating the fiber layers (72) and the cover fibre layers (80) by inserting a ridge (82a) of a mold tool (82) into the cleft (78) and then exerting pressure on the fiber layers (72) and the cover fibre layers (80) using the mold tool (82).

4. The method as recited in claim 3, wherein the consolidating includes heating the fiber layers (72).

5. The method as recited in claim 3 or 4, wherein the fiber layers (72) are preimpregnated fiber layers.

## Patentansprüche

1. Gasturbinenschaufelkomponente, umfassend:
eine Plattform (64), die eine Gaswegseite (64a) und eine Nichtgaswegseite (64b) aufweist;
eine Gasturbinenschaufel (62), die durch einen Übergangsabschnitt (68) mit der Plattform (64) verbunden ist,
wobei die Plattform (64) und die Gasturbinenschaufel (62) aus einem Composite-Material gebildet sind, das Faserschichten (72) aufweist, wobei die Faserschichten (72) zusammenhängend in der Gasturbinenschaufel (62) sind und in dem Übergangsabschnitt (68) divergieren, sodass ein erster Teil (74a) der Faserschichten (72) einen ersten Abschnitt (76a) der Plattform (64) auf einer ersten Seite (62a) der Gasturbinenschaufel (62) bildet und ein zweiter Teil (76b) der Faserschichten (72) einen zweiten Abschnitt (76b) der Plattform (64) auf einer zweiten Seite (62b) der Gasturbinenschaufel (62) bildet, wobei durch das Divergieren der Faserschichten (72) eine offene längliche Teilung (78) entlang der Nichtgaswegseite (64b) der Plattform (64) geformt wird, die V-förmig ist, wobei die Faserschichten (72) an der Teilung (78) verfestigt sind; und **dadurch gekennzeichnet, dass**
die Komponente ferner Abdeckfaserschichten (80) umfasst, die sich durch die Teilung (78) erstrecken; und dass
die Abdeckfaserschichten (80) über der Nase der V-Form glatt sind, aber die Teilung (78) nicht füllen, die Gasturbinenschaufel (62) die Abdeckfaserschichten (80) ausschließt und die Abdeckfaserschichten (80) vollständig verfestigt sind.

2. Komponente nach Anspruch 1, wobei das Composite-Material ein vollständig gehärtetes Polymer-Matrix-Composite ist.

3. Verfahren zum Herstellen einer Gasturbinenschaufelkomponente, wobei das Verfahren Folgendes umfasst:
Platzieren von Faserschichten (72) in einer Form, um eine Plattform (64), die eine Gaswegseite (64a) und eine Nichtgaswegseite (64b) aufweist, und eine Gasturbinenschaufel (62) zu bilden, die durch einen Übergangsabschnitt (68) mit der Plattform (64) verbunden ist, wobei die Faserschichten (72) zusammenhängend in der Gasturbinenschaufel (62) sind und in dem Übergangsabschnitt (68) divergieren, sodass sich ein erster Teil (74a) der Faserschichten (72) auf einer ersten Seite (62a) der Gasturbinenschaufel (62) erstreckt und sich ein zweiter Teil (76b) der Faserschichten (72) auf einer zweiten Seite (62b) der Gasturbinenschaufel (62) erstreckt, wobei durch das Divergieren der Faserschichten (72) eine offene längliche Teilung (78) entlang der Nichtgaswegseite (64b) der Plattform (64) geformt wird, die V-förmig ist;
Platzieren von Abdeckfaserschichten (80), um sich durch die Teilung (78) zu erstrecken, sodass die Abdeckfaserschichten (80) über der Nase der V-Form glatt sind, aber die Teilung (78) nicht füllen und die Gasturbinenschaufel (62) die Abdeckfaserschichten (80) ausschließt; und
Verfestigen der Faserschichten (72) und der Abdeckfaserschichten (80), indem ein Grat (82a) eines Formwerkzeugs (82) in die Teilung (78) eingeführt und dann Druck auf die Faserschichten (72) und die Abdeckfaserschichten (80) unter Verwendung des Formwerkzeugs (82) ausgeübt wird.

4. Verfahren nach Anspruch 3, wobei das Verfestigen das Erwärmen der Faserschichten (72) beinhaltet.

5. Verfahren nach Anspruch 3 oder 4, wobei die Faserschichten (72) vorimprägnierte Faserschichten sind.

## Revendications

1. Composant d'aube de turbine comprenant :
une plateforme (64) ayant un côté d'écoulement de gaz (64a) et un côté de non-écoulement de gaz (64b) ;
une aube de turbine (62) qui est reliée à travers une section de transition (68) à la plateforme (64),
la plateforme (64) et l'aube de turbine (62) étant formées d'un matériau composite ayant des couches de fibres (72), les couches de fibres (72) étant contigües dans l'aube de turbine (62) et se séparant dans la section de transition (68) de sorte qu'une première partie (74a) des couches de fibres (72) forme une première section (76a) de la plateforme (64) d'un premier côté (62a) de l'aube de turbine (62) et une seconde partie (76b) des couches de fibres (72) forme une seconde partie (76b) de la plateforme (64) d'un second côté (62b) de l'aube de turbine (62), la séparation des couches de fibres (72) établissant une fente allongée ouverte (78) le long du côté de non-écoulement de gaz (64b) de la plateforme (64) qui est en forme de V, dans lequel les couches de fibres (72) au niveau de la fente (78) sont consolidées ; et **caractérisé en ce que**
le composant comprend en outre des couches de fibres de recouvrement (80) s'étendant à travers la fente (78) ; et **en ce que**
les couches de fibres de recouvrement (80) aplanissent le nez de la forme en V mais ne remplissent pas la fente (78), l'aube de turbine (62) exclut les couches de fibres de recouvrement (80), et les couches de fibres de recouvrement (80) sont entièrement consolidées.

2. Composant selon la revendication 1, dans lequel le matériau composite est un composite à matrice polymère entièrement durci.

3. Procédé de fabrication d'un composant d'aube de turbine, le procédé comprenant :
le placement de couches de fibres (72) dans un moule pour former une plateforme (64) qui a un côté d'écoulement de gaz (64a) et un côté de non-écoulement de gaz (64b) une aube de turbine (62) qui est reliée à travers une section de transition (68) à la plateforme (64), les couches de fibres (72) sont contigües dans l'aube de turbine (62) et se séparent dans la section de transition (68) de sorte qu'une première partie (74a) des couches de fibres (72) s'étend d'un premier côté (62a) de l'aube de turbine (62) et une seconde partie (76b) des couches de fibres (72) s'étend d'un second côté (62b) de l'aube de turbine (62), la séparation des couches de fibres (72) établissant une fente allongée ouverte (78) le long du côté de non-écoulement de gaz (64b) de la plateforme (64) qui est en forme de V ;
le placement de couches de fibres de recouvrement (80) à étendre à travers la fente (78) de sorte que les couches de fibres de recouvrement (80) aplanissent le nez de la forme en V mais ne remplissent pas la fente (78), et que l'aube de turbine (62) exclut les couches de fibres de recouvrement (80) ; et
la consolidation des couches de fibres (72) et des couches de fibres de recouvrement (80) en insérant une arête (82a) d'un outil de moule (82) dans la fente (78) puis en exerçant une pression sur les couches de fibres (72) et les couches de fibres de recouvrement (80) à l'aide de l'outil de moule (82).

4. Procédé selon la revendication 3, dans lequel la consolidation comporte le chauffage des couches de fibres (72).

5. Procédé selon la revendication 3 ou 4, dans lequel les couches de fibres (72) sont des couches de fibres préimprégnées.
